# NEW EUROPEAN PATENT SPECIFICATION

(11) **EP 1 762 324 B2**
(45) Date of publication and mention of the opposition decision: **26.02.2014**
(45) Mention of the grant of the patent: 22.09.2010
(21) Application number: 06013340.2
(22) Date of filing: 28.06.2006
(51) Int. Cl.: B23K 9/18, B23K 35/36

(54) **Flux system to reduce copper cracking**
Flußmittel zur Verminderung der durch Kupfer verursachten Rißbildung
Flux pour la réduction de la fissuration dûe à la présence de cuivre

(30) Priority: 08.09.2005 US 222251
(43) Date of publication of application: 14.03.2007
(73) Proprietor: Lincoln Global, Inc., City of Industry, CA 91748 (US)
(72) Inventor: James, Matthew J., Brunswick, Ohio 44124 (US); Melfi, Teresa, Kirtland, Ohio 44094 (US)
(74) Representative: GROSSE SCHUMACHER KNAUER VON HIRSCHHAUSEN

(56) References cited:
- GB-A- 912 120
- GB-A- 1 080 337
- JP-A- 9 094 690
- JP-A- 9 277 084
- SU-A1- 576 182
- US-A- 3 100 829
- US-A- 3 919 517
- US-A- 5 300 754

## Description

The invention relates generally to the field of welding and more particularly directed to fluxes having improved weld bead formation properties, and even more particularly directed to a flux system that can be used with a welding electrode to reduce the occurrence of copper cracking in a formed weld bead. A flux system of this type is known from US-A-3 100 829).

### BACKGROUND OF TKE INVENTION

In the field of arc welding, the main types of welding processes are gas-metal arc welding with solid (GMAW) or metal-cored wires (GMAW-C), gas shielded flux-cored arc welding (FCAW-G), self shielded flux-cored arc welding (FCAW-S), shielded metal arc welding (SMAW) and submerged arc welding (SAW). Of these processes, gas metal arc welding with solid or metal-cored electrodes are increasingly being used for joining or overlaying metallic components. These types of welding processes are becoming increasingly popular because such processes provide increased productivity and versatility. Such increase in productivity and versatility results from the continuous nature of the welding electrodes in gas metal arc welding (GMAW & GMAW-C) which offers substantial productivity gains over shielded metal arc welding (SMAW). Moreover, these electrodes produce very good looking welds with very little slag, thus saving the time and expense associated with cleaning welds and disposing of slag, a problem that is often encountered in the other welding processes.

In gas metal arc welding with solid or cored electrodes, a shielding gas can be used to provide protection for the weld against atmospheric contamination during welding. Solid electrodes are appropriately alloyed with ingredients that, in combination with the shielding gas, provide porosity free welds with the desired physical and mechanical properties. In cored electrodes, these ingredients are on the inside, in the core (fill) of a metallic outer sheath, and provide a similar function as in the case of solid electrodes.

Solid and cored electrodes are designed to provide, under appropriate gas shielding, a solid, substantially porosity free weld with yield strength, tensile strength, ductility and impact strength to perform satisfactorily in the final applications. These electrodes are also designed to minimize the quantity of slag generated during welding. Cored electrodes are used increasingly as an alternative to solid wires because of increased productivity during welding fabrication of structural components. Cored electrodes are composite electrodes consisting of a core (fill) material surrounded by a metallic outer sheath. The core can consist mainly of metal powder. The core may also include fluxing ingredients to help with arc stability, weld wetting and appearance etc., such that the desired physical and mechanical properties are obtained in the weld. Cored electrodes are typically manufactured by mixing up the ingredients of the core material and depositing them inside a formed strip, and then closing and drawing the strip to the final diameter. Cored electrodes can provide increased deposition rates and produce a wider, more consistent weld penetration profile compared to solid electrodes. Moreover, cored electrodes can provide improved arc action, generate less fume and spatter, and provide weld deposits with better wetting compared to solid electrodes.

In the art of welding, much prior effort has been expended in developing flux compositions of the type having predetermined flux components intended to perform in predetermined manners. A large number of compositions have been developed for use as fluxes in arc welding both for use generally as welding fluxes. Fluxes are utilized in arc welding to control the arc stability, modify the weld metal composition, and provide protection from atmospheric contamination. Arc stability is commonly controlled by modifying the composition of the flux. Fluxes also modify the weld metal composition by rendering impurities in the metal more easily fusible and providing substances with which these impurities may combine, in preference to the metal to form slag. Other materials may be added to lower the slag melting point, to improve slag fluidity, and to serve as binders for the flux particles.

In the welding of pipe sections, it is common practice to use one or more electrodes that are fed to a groove between adjoining pipe sections to join such pipe section together. The groove between the pipe section is typically filled with a granular flux that is used to protect the weld bead from the atmosphere. During the welding process, the molten metal from the melted welding electrode is covered by molten slag formed from the granular flux. The welding electrode, whether a solid wire or cored wire, typically includes a copper outer layer that is used to facilitate in forming an electrical contact between the welding electrode and the power source of the welder. The resistivity of the copper layer is very small so that the current passes from the contact tip of the welding gun to the welding electrode without generating large heat losses. During the feeding of the welding electrode through the welding gun, flakes of copper are often removed from the outer surface of the welding electrode. These flakes or particles of copper commonly commingle with the granular flux during a welding procedure. These flakes or particles of copper can become molten from the heated slag during a welding procedure and then pass through the slag and contact the formed weld bead. The formed welding bead for iron based alloys typically begins to solidify at about 1400-1800EC. The melting point of copper is about 1085EC. As a result, molten copper commonly passes through the molten slag and eventually settles on the upper surface of the solidified weld bead. Molten copper has a low surface tension, thus tends to migrate into the solidified weld bead at the grain boundaries of the weld bead. The migration of molten copper into the grain boundaries can result in Acopper cracking@. Cracks of any kind are an unacceptable defect in pipe welds. The incidence of copper cracking becomes more pronounced as the granular flux is recycled and reused since such reused granular flux has an increased copper flake or particle content. The increased amount of copper flakes or particles in the reused granular flux results in the increased incidence of copper cracking in the formed weld bead. To reduce the tendency of copper cracking, it is commonly recommended to only use the granular flux once. This recommendation is both costly and results in a substantial amount of waste of effective granular flux. Another method to reduce the incidence of copper cracking is to reduce the abrasive action of the welding tip on the welding electrode so as to reduce the incidence of the copper flaking from the welding electrode. This arrangement requires frequent attention to the welding equipment which can be both time consuming and result in relatively frequent downtime to replace components of the welding gun. As a result, both of these procedures reduce the incidence of Acopper cracking@ and require added expense and added time, thus driving up the cost for forming a weld bead and also increasing the amount of time to form a weld bead.

In view of the current state of the art of welding, there is a need for a granular welding flux that can reduce the incidence of the Acopper cracking@ while enabling the granular welding flux to be reused.

### SUMMARY OF THE INVENTION

The present invention pertains to slag systems for welding and more particularly to a granular flux system that is used with a welding electrode and which is formulated to reduce the incidence of Acopper cracking@ in a formed weld bead. The granular flux system is formulated for particular application in submerged arc welding process and will be described with particular reference thereto; however, it will be appreciated that the granular flux system can be used in other types of welding processes. The granular flux system is also particularly formulated for welding together pipe sections by a submerged arc welding process and will be described with particular reference thereto; however, it will be appreciated that other types of workpieces can be welded together using the granular flux system of the present invention. The granular flux system is formulated to reduce the incidence of Acopper cracking@ during a welding procedure. Copper cracking occurs when molten copper migrates to a solidified weld bead. The source of copper is typically from copper flakes that drop into the granular flux as a copper coated welding electrode passes through the welding gun during a welding operation.

Some of the copper flakes in the granular flux become molten from the heat generated by the welding arc and migrate through the granular flux and molten slag that is formed during the welding process. Due to the low surface tension of the molten copper, the molten copper that eventually migrates through the slag and into contact with the recently solidified weld bead continues into the grain boundaries of the solid weld bead that forms as the weld bead continues to cool. The copper migration into the grains of the weld bead can result in cracking. The granular flux system of the present invention is formulated to reduce the incidence of molten copper interacting with the recently solidified weld bead by increasing the rate at which the molten slag freezes, and/or creating a solidified slag with a higher degree of crystalline structure. It has been found that by increasing the rate at which the molten slag freezes or solidifies, the amount of molten copper that contacts the recently solidified weld bead can be reduced. The rate at which the molten slag freezes can be increased by increasing the melting temperature of the slag. As the melting temperature of the slag is increased, the time it takes the molten slag to cool to a temperature below its melting point decreases, thus increasing the rate at which the molten slag freezes. When the slag is in a molten state, it is easier for the molten copper particles to migrate through the slag and come into contact with the weld bead. Once the slag freezes, the rate of migration of the molten copper through the solidified slag significantly decreases or ceases. By terminating the rate at which the molten copper passes through the solid slag, the amount of molten copper that penetrates the molten slag and gains contact with the weld bead is reduced, thereby reducing the incidence of copper cracking. The impeded movement of the molten copper in the solid slag results in the copper eventually solidifying in the slag before the copper can come in contact with the weld bead, thereby eliminating the chance that such copper can cause copper cracking in the weld bead. Terminating the rate at which the molten copper migrates through the molten slag results in a reduced amount of molten copper that contacts the solidified weld bead. As previously stated, once the molten slag solidifies, the rate at which the molten copper can migrate through the solidified slag is significantly reduced or terminated. It has been further found that by formulating the granular flux so as to form a solid slag that has increased crystalline structures, the rate at which molten copper can migrate through the solid slag decreases. Certain slag components have a tendency to form a glass-type structure when cooled to a solid form, whereas other slag components form a crystalline structure when solidified. The glass-type structure is a more fluid structure and allows the molten copper to migrate through the solid slag. A crystalline structure has been found to essentially bar any migration of the molten copper. As such, by increasing the percentage of slag components that form a crystalline structure once the slag has solidified, the migration of molten copper through the solid slag is significantly impeded.

In accordance with one aspect of the present invention, there is provided a granular flux system according to claim 1.

In accordance with another aspect of the present invention, there is provided a method according to claim 12.

It is a primary object of the invention to provide a welding process that results in a reduction of copper cracking in the weld bead.

Another and/or alternative object of the present invention is the provision of granular flux that reduces copper cracking in the weld bead.

Still another and/or alternative object of the present invention is the provision of a granular flux system that forms a slag that solidifies or freezes at a higher temperature and/or forms a solid slag having a higher degree of crystalline structure.

Yet another and/or alternative object of the present invention is the provision of granular flux that can be reused without causing a substantial increase in the incidence of copper cracking in the weld bead.

These and other objects and advantages will become apparent from the discussion of the distinction between the invention and the prior art and when considering the preferred embodiment as shown in the accompanying drawings.

### BRIEF DESCRIPTION OF THE DRAWINGS

FIGURE 1 is a schematic layout of a submerged arc welding system;
FIGURE 2 is an enlarged cross-sectional view taken generally along line 2-2 of FIGURE 1;
FIGURE 2A is a cross-sectional view, similar to FIGURE 2, showing a cored electrode as the welding wire;
FIGURE 3 is a side elevational view illustrating the relationship of the electrode and workpiece with surrounding flux as used in a submerged arc welding process;
FIGURE 4 is an enlarged cross-sectional view of the prior art illustrating migration or penetration of copper into a grain boundary, when large particles of pure copper are deposited on the outer surface of solidified weld metal during the arc welding process shown in FIGURE 3;
FIGURE 5 is a graph illustrating the slag viscosity of a prior art slag and a slag formed by the granular flux of the present invention as the molten slag cools over time; and,
FIGURE 6 is a graph illustrating the rate of migration of molten copper over time in a prior art slag and a slag formed by the granular flux of the present invention.

### DETAILED DESCRIPTION OF THE INVENTION

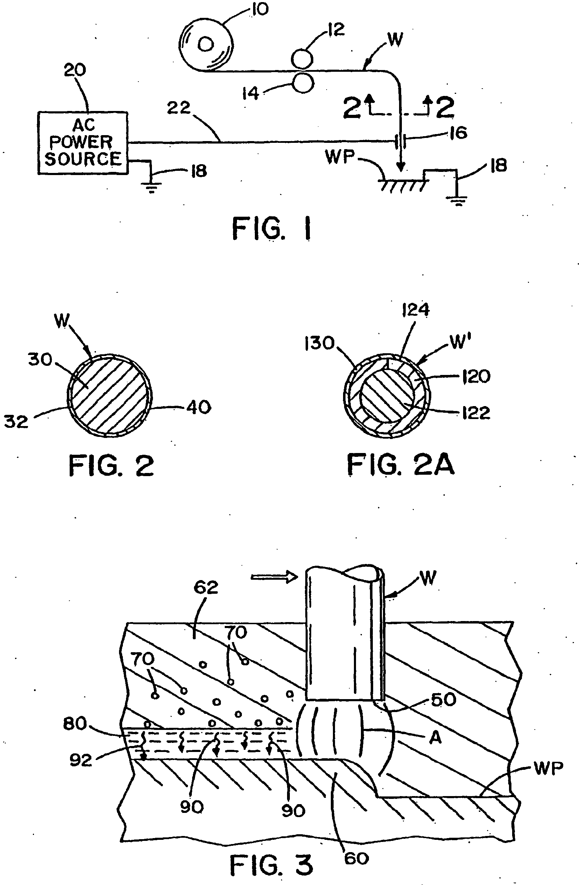

Referring now in greater detail to the drawings, wherein the showings are for the purpose of illustrating preferred embodiments of the invention only, and not for the purpose of limiting the invention, FIGURE 1 schematically illustrates a submerged arc welding process using an electric arc welding wire W provided on a reel 10 and pulled from the reel by drive rolls 12, 14. The granular flux system of the present invention is principally formulated for use in a submerged arc welding process; however, it will be appreciated that the granular flux system could be used in other types of welding procedures. Referring again to FIGURE 1, the rolls force wire W through contact tip 16 toward a grounded workpiece WP where the welding wire W is melted by electric current from an AC, DC+ or DC-power source 20. To perform the welding process, a power lead 22 is connected with a contact tip 16 of a welding gun. In accordance with standard technology, welding wire W is a solid wire, flux cored wire, or a metal cored wire. A solid metal wire is illustrated in FIGURE 2. The solid metal wire W includes a solid metal core 30 having an outer cylindrical surface 32 that is covered or coated with a low resistivity layer 40. According to standard industry practice, low resistivity layer 40 is essentially pure copper. A metal cored wire W is illustrated in FIGURE 2A. The metal cored wire includes a metal sheath 120 and metal power 122 within the metal sheath. The metal sheath has an outer cylindrical surface 124 that is covered or coated with a low resistivity layer 130 such as essentially pure copper.

The submerged arc welding process is illustrated in more detail in FIGURE 3 wherein welding wire W has lower end 50 facing workpiece WP. Current from power source 20 creates arc A as the electrode or wire W traverses in the direction of the arrow shown in FIGURE 3. The welding process melts metal from workpiece WP and from advancing welding wire W to create a molten metal puddle that ultimately solidifies to form a weld bead 60, Wire W moves through a large mass of granular flux 62. The granular flux is formulated to partially melt during the welding process and to form a protective slag layer 80 over the weld bead 60. The slag layer is designed to protect the weld bead from adverse elements (e.g., oxygen nitrogen, etc.) and/or compounds (e.g., water, etc.) in the atmosphere from interacting with the molten weld bead.

During a welding procedure, copper flakes or particles 70 are scraped off of the outer surface of the welding wire W as the welding wire passes through the welding gun. These copper flakes or particles 70 can be relatively large and in some instances accumulate as globules in granular flux 62 as shown schematically in FIGURE 3. These large particles or flakes 70 from the metal of layer 40 welding wire W melt during the welding process, and migrate through granular flux 72 and/or the molten slag 80. Migration lines 90 represent the molten copper particles or masses 70 moving through the molten slag 80. The slag is typically formulated to solidify at a temperature lower than the solidification temperature of weld metal or bead 60; however, as indicated by migration line 90, the molten copper flakes or particles 70 can migrate to and into contact with the weld metal solidifying and forming grains.

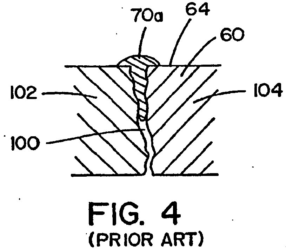

Referring now to FIGURE 4, the molten copper is illustrated on the upper surface 64 of hot weld bead 60. In this situation, a mass of copper 70a has migrated through molten slag 80 onto the upper surface 64 of weld bead 60. This phenomenon is the prior art problem to which this invention is directed. On the upper surface 64 of weld bead 60, the pure copper of mass 70a has a low surface tension and tends to penetrate into grain boundary 100 of grains 102, 104 in the solid weld bead. The size of molten copper particle 70a is disproportionate to the grain boundary size 100; however, FIGURE 4 schematically illustrates what happens when the molten mass of pure copper migrates through molten slag 80 and engages weld metal bead 60. The pure copper enters the grain boundary of the solidified weld bead. Thus reducing the strength of the overall weld to the point where the existing residual stresses will form a crack. This crack is an unacceptable defect.

The granular flux of the present invention is formulated to reduce the incidence of copper cracking, even when the granular flux is recycled more than once. The components in the granular flux are selected to 1) increase the melt point temperature of the molten slag so that the slag freezes more quickly, and/or 2) form a solid slag that is more crystalline in structure. The granular flux is an improvement of prior flux systems that had lower melting points for the molten slag and formed a glassy type slag. A comparison of one prior art granular flux system to one non-limiting example of the new granular flux system is set forth below in weight percent of the flux system:

| Compound | Prior Art | New Formulation |
|---|---|---|
| Al₂O₃ | 26.6% | 27.3% |
| CaO | 4.97% | 5.81% |
| CaF₂ | 13.5% | 13.9% |
| FeOₓ | 1.2% | 1.7% |
| K₂O | 0% | 0% |
| MgO | 15.7% | 16.6% |
| MnO | 10.5% | 12.5% |
| Na₂O | 3.1% | 2.3% |
| SiO₂ | 19% | 17.7% |
| TiO₂ | 0.8% | 0.8% |
| ZrO₂ | 2.2% | 0% |

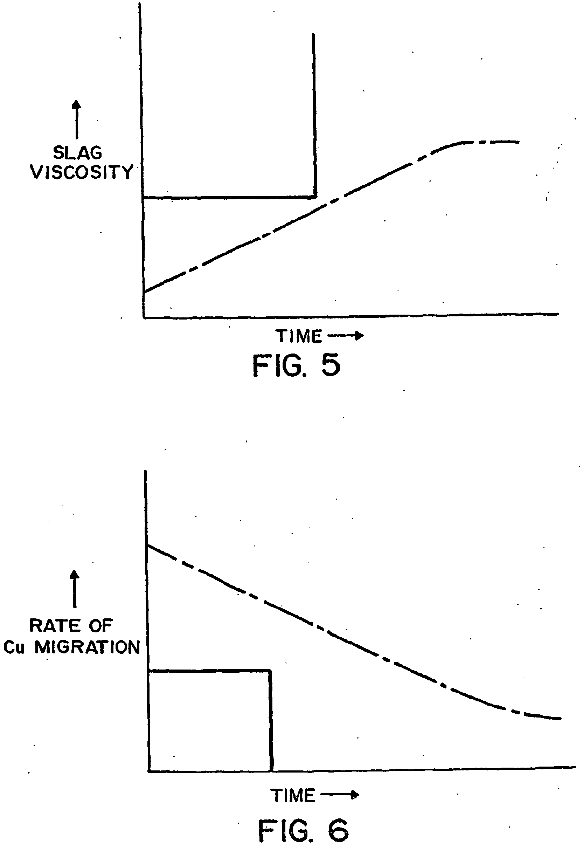

The new formulation of the granular flux system overcomes many of the past problems associated with copper cracking in the weld bead. The new formulation forms a slag having a substantially crystalline structure whereas the prior art glass forms a glassy type slag. As a result of these features of the new formulation, significantly less amounts of molten copper migrate through the slag during a welding process, thus significant reductions in the amount of copper entering into the grains of the solidified weld bead during the cooling of the welding occurs. The effect of reducing the amount of molten copper migrating through the slag is illustrated in FIGURES 5 and 6. FIGURE 5 illustrates the relative viscosity of one non-limiting slag formed by the granular flux of the present invention shown in solid line to the viscosity of a slag formed by prior art granular fluxes similar to the example set forth above, shown in a dotted line. As illustrated in FIGURE 5, when the molten slag cools and forms a slag having a crystalline structure, the viscosity very rapidly increases as illustrated by the vertical line. The molten slag formed by the prior art, granular flux has a lower viscosity, which viscosity gradually increases until the slag cools and freezes or solidifies. The slag formed by the prior art flux system has a lower melting point, thus takes a longer time to solidify as compared to the granular flux in accordance with the present invention. Once the slag formed by the prior art flux system solidifies, it forms a glassy type slag that has a lower final viscosity than the crystalline structured slag formed by the flux system in accordance with the present invention. The final viscosity of the slag formed by the prior art flux system is represented by the flattening of the line. As a result of the faster freezing time of the molten slag formed by the flux system in accordance with the present invention, less molten copper migration through the slag can occur. This phenomena is represented in FIGURE 6. As shown in FIGURE 6, the rate of migration of molten copper through the molten slag formed by the flux system in accordance with the present invention is relatively low, which is believed to be due in part to the higher viscosity of the molten slag and/or structure of the slag. When the molten slag solidifies, the crystalline structure of the slag essentially prevents further migration of the molten copper through the slag. The molten slag formed by the prior art granular flux has a lower viscosity when formed; thus the rate of migration of the molten copper through the molten slag is greater. As the molten slag begins to cool, the viscosity of the slag increases and the rate of migration of the molten copper through the slag decreases. Once the slag solidifies, the rate of migration of the molten copper through the solid slag is lower, but due to the glassy structure of the solid slag, the molten copper can still migrate through the solid slag and thus penetrate the slag to the solid metal weld bead. The area under each of the lines represents the relative amount of molten copper that migrated in the molten and solid slag. The area under the solid line representing the slag formed by the flux system in accordance with the present invention is significantly less than the area under the dotted line representing the slag formed by the prior art flux system. This significant reduction of molten copper migration through the slag by the slag formed by the flux system in accordance with the present invention results in a significant decrease in the occurrence of molten copper penetrating into the grains of the weld bead during the cooling of the weld bead. As such, the occurrence of copper cracking is reduced by use of the granular flux system of the present invention. In view of the fact that very little molten copper is allowed to migrate through the slag formed by the granular flux system of the present invention, the unused granular flux can be reused in other welding operations without resulting in a significant increase in the incidence of copper cracking.

These and other modifications of the discussed embodiments, as well as other embodiments of the invention, will be obvious and suggested to those skilled in the art from the disclosure herein, whereby it is to be distinctly understood that the foregoing descriptive matter is to be interpreted merely as illustrative of the present invention and not as a limitation thereof.

## Claims

1. A granular flux formulated to reduce the amount of molten copper migration through a slag during a welding procedure, said granular flux comprising at least about 15 weight percent high melting point components and less than about 40 weight percent components that promote a glassy slag, a weight ratio of said high melting point components to said components that promote a glassy slag being about 0.9-1.5:1, said high melting point components including compounds selected from the group consisting of CaO, MgO, or combinations thereof, said components that promote a glassy slag including compounds selected from the group consisting of Na₂O, SiO₂, ZrO₂, or combinations thereof, **characterized in that** said granular flux comprises in weight percent:
| | a) | b) |
|---|---|---|
| Al₂O₃ | 20-35% | 22-33% |
| CaO | 5-9% | 4-7% |
| CaF₂ | 10-18% | 10-18% |
| FeOₓ | 0-3% | 0-3% |
| K₂O | 0-3% | 0-2% |
| MgO | 12-20% | 14-22% |
| MnO | 9-16% | 10-16% |
| Na₂O | 0-4% | 1-4% |
| SiO₂ | 12-20% | 14-20% |
| TiO₂ | 0-4% | 0-3% |
| ZrO₂ | 0-2% | 0-2% |

2. The granular flux as defined in claim 1, wherein said weight ratio of said high melting point components to said components that promote a glassy slag is 0.95-1.2:1.

3. The granular flux as defined in any one of claims 1-2, wherein said weight percent of said high melting point components is greater than said weight percent of said components that promote a glassy slag.

4. The granular flux as defined in any one of claims 1-3, wherein said Na₂O, SiO₂, ZrO₂, or combinations thereof constitute up to 30 weight percent of said granular flux.

5. The granular flux as defined in claim 4, wherein said Na₂O, SiO₂, ZrO₂, or combinations thereof constitute up to 24.2 weight percent of said granular flux.

6. The granular flux as defined in any one of claims 1-5, wherein said CaO, MgO, or combinations thereof constitute at least 18 weight percent of said granular flux.

7. The granular flux as defined in claim 6, wherein said CaO, MgO, or combinations thereof constitute at least 20.7 weight percent of said granular flux.

8. The granular flux as defined in any one of claims 1-7, wherein said CaO constitutes at least 3.5 weight percent of said granular flux.

9. The granular flux as defined in any one of claims 1-8, wherein said MgO constitutes at least 12 weight percent of said granular flux.

10. The granular flux as defined in any one of claims 1-9, wherein said Na₂O constitutes up to 4 weight percent of said granular flux.

11. The granular flux as defined in claim 1, wherein said granular flux comprises in weight percent:
| | |
|---|---|
| Al₂O₃ | 24-29% |
| CaO | 5-7% |
| CaF₂ | 12-15% |
| FeOₓ | 0.5-2% |
| K₂O | 0-1% |
| MgO | 14-18% |
| MnO | 10-14% |
| Na₂O | 1-3% |
| SiO₂ | 15-18% |
| TiO₂ | 0.1-1% |
| ZrO₂ | 0-2% |

12. A method for reducing the amount of molten copper deposited in grains formed during the hardening and cooling of a weld bead during a welding process comprising:
a) providing a consumable welding electrode, said electrode including an outer conductive copper coating;
b) feeding said consumable welding electrode through a welding gun, at least a portion of said copper coating flaked off said consumable welding electrode during said feeding of said consumable electrode through said welding gun;
c) at least partially melting said consumable welding electrode to cause said melted portion of said consumable welding electrode to be deposited on a work piece to form a weld metal on at least a work piece;
d) providing a granular flux in accordance with claim 1 in a region of said weld metal formation; and,
e) at least partially melting a portion of said granular flux to form a molten slag at least partially about said weld metal.

13. The method as defined in claim 12, wherein said welding process is a submerged arc welding process.

14. The method as defined in claim 12, wherein said consumable electrode includes a solid metal core.

15. The method as defined in claim 12, wherein said consumable electrode includes a powdered metal core.

16. The method as defined in any one of claims 12-15, including the step of directing a shielding gas to said work piece to at least partially shield said weld metal being deposited on a work piece.

17. The method as defined in claim 16, wherein said shielding gas includes argon, carbon dioxide or mixtures thereof.

18. The method as defined in claim 12, wherein said weight percent of said high melting point components is greater than said weight percent of said components that promote a glassy slag.

19. The method as defined in claim 12, wherein said Na₂O, SiO₂, ZrO₂, or combinations thereof constitute up to 30 weight percent of said granular flux.

20. The method as defined in claim 19, wherein said Na₂O, SiO₂, ZrO₂, or combinations thereof constitute up to 24.2 weight percent of said granular flux.

21. The method as defined in claim 12, wherein said CaO, MgO, or combinations thereof constitute at least 18 weight percent of said granular flux.

22. The method as defined in claim 21, , wherein said CaO, MgO, or combinations thereof constitute at least 20.7 weight percent of said granular flux.

23. The method as defined in any one of claims 12-22, wherein said CaO constitutes at least 3.5 weight percent of said granular flux.

24. The method as defined in any one of claims 12-23, wherein said MgO constitutes at least 12 weight percent of said granular flux.

25. The method as defined in any one of claims 12-24, wherein said Na₂O constitutes up to 4 weight percent of said granular flux.

26. The method as defined in any one of claims 12-25, wherein said granular flux comprises in weight percent:
| | |
|---|---|
| Al₂O₃ | 24-29% |
| CaO | 5-7% |
| CaF₂ | 12-15% |
| FeOₓ | 0.5-2% |
| K₂O | 0-1% |
| MgO | 14-18% |
| MnO | 10-14% |
| Na₂O | 1-3% |
| SiO₂ | 15-18% |
| TiO₂ | 0.1-1% |
| ZrO₂ | 0-2% |

## Patentansprüche

1. Granulöses Flussmittel, das zum Reduzieren der Menge von geschmolzener Kupfermigration durch eine Schlacke während eines Schweißverfahrens formuliert ist, wobei das granulöse Flussmittel mindestens etwa 15 Gewichtsprozent Bestandteile mit hohem Schmelzpunkt und weniger als etwa 40 Gewichtsprozent Bestandteile umfasst, die eine glasartige Schlacke fördern, wobei ein Gewichtsverhältnis von den Bestandteilen mit hohem Schmelzpunkt zu den Bestandteilen, die eine glasartige Schlacke fördern, etwa 0,9 bis 1,5:1 beträgt, wobei die Bestandteile mit hohem Schmelzpunkt Verbindungen enthalten, die ausgewählt sind aus der Gruppe bestehend aus CaO, MgO oder Kombinationen davon, wobei die Bestandteile, die eine glasartige Schlacke fördern, Verbindungen enthalten, die ausgewählt sind aus der Gruppe bestehend aus Na₂O, SiO₂, ZrO₂ oder Kombinationen davon, **dadurch gekennzeichnet, dass** das granulöse Flussmittel Folgendes in Gewichtsprozent umfasst:
| | a) | b) |
|---|---|---|
| Al₂O₃ | 20-35 % | 22-33 % |
| CaO | 5-9 % | 4-7 % |
| CaF₂ | 10-18 % | 10-18 % |
| FeOₓ | 0-3 % | 0-3 % |
| K₂O | 0-3 % | 0-2 % |
| MgO | 12-20 % | 14-22 % |
| MnO | 9-16 % | 10-16 % |
| Na₂O | 0-4 % | 1-4 % |
| SiO₂ | 12-20 % | 14-20 % |
| TiO₂ | 0-4 % | 0-3 % |
| ZrO₂ | 0-2 % | 0-2 % |

2. Granulöses Flussmittel nach Anspruch 1, wobei das Gewichtsverhältnis der Bestandteile mit hohem Schmelzpunkt zu den Bestandteilen, die eine glasartige Schlacke fördern, 0,95 bis 1,2:1 beträgt.

3. Granulöses Flussmittel nach einem der Ansprüche 1 bis 2, wobei der Gewichtsprozentanteil der Bestandteile mit hohem Schmelzpunkt größer als der Gewichtsprozentanteil der Bestandteile ist, die eine glasartige Schlacke fördern.

4. Granulöses Flussmittel nach einem der Ansprüche 1 bis 3, wobei das Na₂O, SiO₂, ZrO₂ oder Kombinationen davon bis zu 30 Gewichtsprozent des granulösen Flussmittels ausmachen.

5. Granulöses Flussmittel nach Anspruch 4, wobei das Na₂O, SiO₂, ZrO₂ oder Kombinationen davon bis zu 24,2 Gewichtsprozent des granulösen Flussmittels ausmachen.

6. Granulöses Flussmittel nach einem der Ansprüche 1 bis 5, wobei das CaO, MgO oder Kombinationen davon mindestens 18 Gewichtsprozent des granulösen Flussmittels ausmachen.

7. Granulöses Flussmittel nach Anspruch 6, wobei das CaO, MgO oder Kombinationen davon mindestens 20,7 Gewichtsprozent des granulösen Flussmittels ausmachen.

8. Granulöses Flussmittel nach einem der Ansprüche 1 bis 7, wobei das CaO mindestens 3,5 Gewichtsprozent des granulösen Flussmittels ausmacht.

9. Granulöses Flussmittel nach einem der Ansprüche 1 bis 8, wobei das MgO mindestens 12 Gewichtsprozent des granulösen Flussmittels ausmacht.

10. Granulöses Flussmittel nach einem der Ansprüche 1 bis 9, wobei das Na₂O bis zu 4 Gewichtsprozent des granulösen Flussmittels ausmacht.

11. Granulöses Flussmittel nach Anspruch 1, wobei das granulöse Flussmittel Folgendes in Gewichtsprozent umfasst:
| | |
|---|---|
| Al₂O₃ | 24-29 % |
| CaO | 5-7 % |
| CaF₂ | 12-15 % |
| FeOₓ | 0,5-2 % |
| K₂O | 0-1 % |
| MgO | 14-18 % |
| MnO | 10-14 % |
| Na₂O | 1-3 % |
| SiO₂ | 15-18 % |
| TiO₂ | 0,1-1 % |
| ZrO₂ | 0-2 % |

12. Verfahren zum Verringern der Menge von geschmolzenem Kupfer, das in Körnern abgeschieden ist, die während der Härtung und Abkühlung einer Schweißstelle während eines Schweißprozesses gebildet werden, umfassend:
a) Bereitstellen einer selbstverzehrenden Schweißelektrode, wobei die Elektrode eine äußere leitfähige Kupferbeschichtung aufweist;
b) Leiten der selbstverzehrenden Schweißelektrode durch eine Schweißpistole, wobei mindestens ein Teil der Kupferbeschichtung von der selbstverzehrenden Schweißelektrode während des Leitens der selbstverzehrenden Elektrode durch die Schweißpistole abblättert;
c) mindestens teilweise Schmelzen der selbstverzehrenden Schweißelektrode, um zu bewirken, dass der geschmolzene Abschnitt der selbstverzehrenden Schweißelektrode auf einem Werkstück abgeschieden wird, um ein Schweißmetall auf mindestens einem Werkstück zu bilden;
d) Bereitstellen eines granulösen Flussmittels nach Anspruch 1 in einem Bereich der Schweißmetallformation; und
e) mindestens teilweise Schmelzen eines Abschnitts des granulösen Flussmittels, um eine geschmolzene Schlacke mindestens teilweise um das Schweißmetall zu bilden.

13. Verfahren nach Anspruch 12, wobei der Schweißprozess ein Unterpulverschweißprozess ist.

14. Verfahren nach Anspruch 12, wobei die selbstverzehrende Elektrode einen festen Metallkern aufweist.

15. Verfahren nach Anspruch 12, wobei die selbstverzehrende Elektrode einen pulverförmigen Metallkern aufweist.

16. Verfahren nach einem der Ansprüche 12 bis 15, aufweisend den Schritt des Lenkens eines Schutzgases auf das Werkstück, um das Schweißmetall, das auf ein Werkstück abgeschieden wird, mindestens teilweise zu schützen.

17. Verfahren nach Anspruch 16, wobei das Schutzgas Argon, Kohlenstoffdioxid oder Mischungen davon einschließt.

18. Verfahren nach Anspruch 12, wobei der Gewichtsprozentanteil der Bestandteile mit hohem Schmelzpunkt größer als der Gewichtsprozentanteil der Bestandteile ist, die eine glasartige Schlacke fördern.

19. Verfahren nach Anspruch 12, wobei das Na₂O, SiO₂, ZrO₂ oder Kombinationen davon bis zu 30 Gewichtsprozent des granulösen Flussmittels ausmachen.

20. Verfahren nach Anspruch 19, wobei das Na₂O, SiO₂, ZrO₂ oder Kombinationen davon bis zu 24,2 Gewichtsprozent des granulösen Flussmittels ausmachen.

21. Verfahren nach Anspruch 12, wobei das CaO, MgO oder Kombinationen davon mindestens 18 Gewichtsprozent des granulösen Flussmittels ausmachen.

22. Verfahren nach Anspruch 21, wobei das CaO, MgO oder Kombinationen davon mindestens 20,7 Gewichtsprozent des granulösen Flussmittels ausmachen.

23. Verfahren nach einem der Ansprüche 12 bis 22, wobei das CaO mindestens 3,5 Gewichtsprozent des granulösen Flussmittels ausmacht.

24. Verfahren nach einem der Ansprüche 12 bis 23, wobei das MgO mindestens 12 Gewichtsprozent des granulösen Flussmittels ausmacht.

25. Verfahren nach einem der Ansprüche 12 bis 24, wobei das Na₂O mindestens 4 Gewichtsprozent des granulösen Flussmittels ausmacht.

26. Verfahren nach einem der Ansprüche 12 bis 25, wobei das granulöse Flussmittel in Gewichtsprozent Folgendes umfasst:
| | |
|---|---|
| Al₂O₃ | 24-29 % |
| CaO | 5-7 % |
| CaF₂ | 12-15 % |
| FeOₓ | 0,5-2 % |
| K₂O | 0-1 % |
| MgO | 14-18 % |
| MnO | 10-14 % |
| Na₂O | 1-3 % |
| SiO₂ | 15-18 % |
| TiO₂ | 0,1-1 % |
| ZrO₂ | 0-2 % |

## Revendications

1. Flux granulaire formulé pour réduire la quantité de migration de cuivre fondu à travers une scorie au cours d'une procédure de soudage, ledit flux granulaire comprenant au moins environ 15 % en poids de composants de point de fusion élevé et moins d'environ 40 % en poids de composants qui favorisent une scorie vitreuse, un rapport pondéral desdits composants de point de fusion élevé auxdits composants qui favorisent une scorie vitreuse étant d'environ 0,9 à 1,5:1, lesdits composants de point de fusion élevé incluant des composés choisis dans le groupe constitué par CaO, MgO ou des combinaisons de ceux-ci, lesdits composants qui favorisent une scorie vitreuse comprenant des composés choisis dans le groupe constitué par Na₂O, SiO₂, ZrO₂ ou des combinaisons de ceux-ci, **caractérisé en ce que** ledit flux granulaire comprend en pourcentage en poids:
| | a) | b) |
|---|---|---|
| Al₂O₃ | 20 à 35 % | 22 à 33 % |
| CaO | 5 à 9 % | 4 à 7 % |
| CaF₂ | 10 à 18 % | 10 à 18 % |
| FeOₓ | 0 à 3 % | 0 à 3 % |
| K₂O | 0 à 3 % | 0 à 2 % |
| MgO | 12 à 20 % | 14 à 22 % |
| MnO | 9 à 16 % | 10 à 16 % |
| Na₂O | 0 à 4 % | 1 à 4 % |
| SiO₂ | 12 à 20 % | 14 à 20 % |
| TiO₂ | 0 à 4 % | 0 à 3 % |
| ZrO₂ | 0 à 2 % | 0 à 2 % |

2. Flux granulaire tel que défini selon la revendication 1, dans lequel ledit rapport pondéral desdits composants de point de fusion élevé auxdits composants qui favorisent une scorie vitreuse est de 0,95 à 1,2:1.

3. Flux granulaire tel que défini selon l'une quelconque des revendications 1 à 2, dans lequel ledit pourcentage en poids desdits composants de point de fusion élevé est supérieur audit pourcentage en poids desdits composants qui favorisent une scorie vitreuse.

4. Flux granulaire tel que défini selon l'une quelconque des revendications 1 à 3, dans lequel lesdits Na₂O, SiO₂, ZrO₂ ou lesdites combinaisons de ceux-ci représentent jusqu'à 30 % en poids dudit flux granulaire.

5. Flux granulaire tel que défini selon la revendication 4, dans lequel lesdits Na₂O, SiO₂, ZrO₂ ou lesdites combinaisons de ceux-ci représentent jusqu'à 24,2 % en poids dudit flux granulaire.

6. Flux granulaire tel que défini selon l'une quelconque des revendications 1 à 5, dans lequel lesdits CaO, MgO ou lesdites combinaisons de ceux-ci représentent au moins 18 % en poids dudit flux granulaire.

7. Flux granulaire tel que défini selon la revendication 6, dans lequel lesdits CaO, MgO ou lesdites combinaisons de ceux-ci représentent au moins 20,7 % en poids dudit flux granulaire.

8. Flux granulaire tel que défini selon l'une quelconque des revendications 1 à 7, dans lequel ledit CaO représente au moins 3,5 % en poids dudit flux granulaire.

9. Flux granulaire tel que défini selon l'une quelconque des revendications 1 à 8, dans lequel ledit MgO représente au moins 12 % en poids dudit flux granulaire.

10. Flux granulaire tel que défini selon l'une quelconque des revendications 1 à 9, dans lequel ledit Na₂O représente jusqu'à 4 % en poids dudit flux granulaire.

11. Flux granulaire tel que défini selon la revendication 1, dans lequel ledit flux granulaire comprend en pourcentage en poids :
| | |
|---|---|
| Al₂O₃ | 24 à 29 % |
| CaO | 5 à 7 % |
| CaF₂ | 12 à 15 % |
| FeOₓ | 0,5 à 2 % |
| K₂O | 0 à 1 % |
| MgO | 14 à 18 % |
| MnO | 10 à 14 % |
| Na₂O | 1 à 3 % |
| SiO₂ | 15 à 18 % |
| TiO₂ | 0,1 à 1 % |
| ZrO₂ | 0 à 2 % |

12. Procédé de réduction de la quantité de cuivre fondu déposé dans des grains formés pendant le durcissement et le refroidissement d'un cordon de soudure au cours d'un procédé de soudage consistant à:
a) fournir une électrode de soudage consommable, ladite électrode incluant un revêtement de cuivre conducteur extérieur;
b) alimenter ladite électrode de soudage consommable par le biais d'un pistolet de soudage, au moins une partie dudit revêtement de cuivre s'effritant de ladite électrode de soudage consommable pendant ladite alimentation de ladite électrode de soudure consommable par le biais d'un pistolet de soudage;
c) faire fondre au moins partiellement ladite électrode de soudage consommable pour provoquer le dépôt de ladite partie fondue de ladite électrode de soudage consommable sur une pièce d'usinage pour former un métal fondu sur au moins une pièce d'usinage;
d) fournir un flux granulaire selon la revendication 1 dans une région de ladite formation du métal fondu; et
e) faire fondre au moins partiellement une partie dudit flux granulaire pour former une scorie fondue au moins partielle autour dudit métal fondu.

13. Procédé tel que défini selon la revendication 12, dans lequel ledit procédé de soudage est un procédé de soudage à l'arc immergé.

14. Procédé tel que défini selon la revendication 12, dans lequel ladite électrode consommable comprend un noyau métallique solide.

15. Procédé tel que défini selon la revendication 12, dans lequel ladite électrode consommable comprend un noyau métallique pulvérulent.

16. Procédé tel que défini selon l'une quelconque des revendications 12 à 15, comprenant l'étape consistant à diriger un gaz protecteur sur ladite pièce d'usinage pour protéger au moins partiellement ledit métal fondu qui est déposé sur une pièce d'usinage.

17. Procédé tel que défini selon la revendication 16, dans lequel ledit gaz protecteur comprend l'argon, le dioxyde de carbone ou des mélanges de ceux-ci.

18. Procédé tel que défini selon la revendication 12, dans lequel ledit pourcentage en poids desdits composants de point de fusion élevé est supérieur audit pourcentage en poids desdits composants qui favorisent une scorie vitreuse.

19. Procédé tel que défini selon la revendication 12, dans lequel lesdits Na₂O, SiO₂, ZrO₂ ou lesdites combinaisons de ceux-ci représentent jusqu'à 30 % en poids dudit flux granulaire.

20. Procédé tel que défini selon la revendication 19, dans lequel lesdits Na₂O, SiO₂, ZrO₂ ou lesdites combinaisons de ceux-ci représentent jusqu'à 24,2 % en poids dudit flux granulaire.

21. Procédé tel que défini selon la revendication 12, dans lequel lesdits CaO, MgO ou lesdites combinaisons de ceux-ci représentent au moins 18 % en poids dudit flux granulaire.

22. Procédé tel que défini selon la revendication 21, dans lequel lesdits CaO, MgO ou lesdites combinaisons de ceux-ci représentent au moins 20,7 % en poids dudit flux granulaire.

23. Procédé tel que défini selon l'une quelconque des revendications 12 à 22, dans lequel ledit CaO représente au moins 3,5 % en poids dudit flux granulaire.

24. Procédé tel que défini selon l'une quelconque des revendications 12 à 23, dans lequel ledit MgO représente au moins 12 % en poids dudit flux granulaire.

25. Procédé tel que défini selon l'une quelconque des revendications 12 à 24, dans lequel ledit Na₂O représente jusqu'à 4 % en poids dudit flux granulaire.

26. Procédé tel que défini selon l'une quelconque des revendications 12 à 25, dans lequel ledit flux granulaire comprend en pourcentage en poids:
| | |
|---|---|
| Al₂O₃ | 24 à 29 % |
| CaO | 5 à 7 % |
| CaF₂ | 12 à 15 % |
| FeOₓ | 0,5 à 2 % |
| K₂O | 0 à 1 % |
| MgO | 14 à 18 % |
| MnO | 10 à 14 % |
| Na₂O | 1 à 3 % |
| SiO₂ | 15 à 18 % |
| TiO₂ | 0,1 à 1 % |
| ZrO₂ | 0 à 2 % |
